# EUROPÄISCHE PATENTSCHRIFT

(11) **EP 3 734 136 B1**
(45) Veröffentlichungstag und Bekanntmachung des Hinweises auf die Patenterteilung: **29.03.2023**
(21) Anmeldenummer: 20171364.1
(22) Anmeldetag: 24.04.2020
(51) Int. Cl.: F16L 55/18, F16L 55/44, F16L 55/165

(54) **SANIERUNGSPACKER MIT FÜHRUNG**
RENOVATION PACKER HAVING A GUIDE
AMENEUR D'ASSAINISSEMENT POURVU DE GUIDAGE

(30) Priorität: 03.05.2019 DE 102019111539
(43) Veröffentlichungstag der Anmeldung: 04.11.2020
(73) Patentinhaber: Krausser, Antje, 49777 Klein Berssen (DE)
(72) Erfinder: Krausser, Antje, 49777 Klein Berssen (DE)
(74) Vertreter: Bittner, Bernhard

(56) Entgegenhaltungen:
- EP-A1- 1 065 429
- JP-A- H0 777 296
- JP-A- H02 107 894
- US-A1- 2018 238 484

## Beschreibung

Die vorliegende Erfindung bezieht sich auf einen sogenannten Sanierungspacker. Sanierungspacker werden eingesetzt, um Rohre, Kanäle, Schächte oder dergleichen zu reparieren. Falls in derartigen Rohren oder Kanälen ein Bruch, ein Riss oder ein Loch aufgetreten ist, ist es möglich, einen sogenannten Sanierungspacker in dieses Rohr zu schieben, an die entsprechende Stelle zu bewegen und an dem Sanierungspacker an dessen Außenumfang ein Reparaturmaterial anzuordnen. Der Sanierungspacker wird innerhalb des Rohres beispielsweise mit Druckluft expandiert und das Reparaturmaterial presst sich an die zu reparierende Stelle.

Dabei tritt jedoch teilweise das Problem auf, dass sich der Sanierungspacker innerhalb eines Rohres nicht leicht bzw. zuverlässig führen lässt, was insbesondere bei gekrümmten Rohren, Kanälen oder Schächten auftreten kann.

So offenbart die europäische Patentanmeldung EP 1 065 429 A1 eine Vorrichtung zur Herstellung von Auskleidungen im Inneren von Schächten und/oder Leitungen mit wasserdichtem, harzbeschichtetem Filz. Dabei besteht die Vorrichtung im Wesentlichen aus einer Raupe, der sich aus einem Expansionsrohr, zwei Endstücken, einem Innenschlauch, drei Aufhängungsseilen und einem unteren Schutzkorb zusammensetzt. Die Anbringung des harzbeschichteten Filzes erfolgt in folgender Weise: die Raupe wird in den Schacht oder in die Leitung eingefahren, und sobald der abzudichtende Teil des Schachtes oder der Leitung erreicht ist, wird das Gummirohr aufgebläht (mit erwärmtem Wasser oder warmer Luft). Der Filz wird gegen die Innenwände des Schachtes oder der Leitung gedrückt und macht, sobald er polymerisiert und wieder abgekühlt ist, diesen Teil undurchlässig gegenüber Zu- oder Abflüssen.

Die U.S. amerikanische Patentanmeldung US 2018/238484 A1 beschreibt einen aufblasbaren Stopfen zum Abdichten einer Rohrleitung umfassend ein rohrförmiges Element. Das rohrförmige Element hat eine Innenfläche und eine Außenfläche, die sich in axialer Richtung von einem ersten Ende zu einem zweiten Ende erstreckt. Das rohrförmige Element definiert eine zentrale Kammer, die konfiguriert ist, um sich auf einen vorbestimmten Druck aufzublasen, so dass sich die äußere Oberfläche des rohrförmigen Elements ausdehnt, um eine innere Oberfläche der Rohrleitung zu berühren.

Ferner beschreibt die japanische Patentanmeldung JP H07 77296 A einen unterirdischen Rohrreparaturpacker. Dieser unterirdische Rohrreparaturpacker ist so ausgebildet, dass eine Gummimanschette an der Außenseite eines metallischen zylindrischen Körpers (Rohrkörper) angebracht ist, der mit einer großen Anzahl von Löchern versehen. Ein Luftaustrittsrohr ist in dem Rohrkörper angeordnet, um die vom Kompressor gesendete Luft in den Rohrkörper abzulassen. Die freigesetzte Luft strömt durch das Loch des Rohrkörpers um die Hülse auszudehnen, und das blattförmige Reparaturmaterial, das um die Außenseite der Hülse gewickelt ist, an das Abwasserrohr einschließlich des gerissenen Abschnitts zu drücken.

Der vorliegenden Erfindung liegt daher die Aufgabe zugrunde, derartige Führungen eines Sanierungspackers innerhalb von Rohren zu erleichtern. Diese Aufgabe wird erfindungsgemäß durch die Gegenstände der unabhängigen Patentansprüche 1 und 8 erreicht. Vorteilhafte Ausführungsformen und Weiterbildungen sind Gegenstand der Unteransprüche.

Ein erfindungsgemäßer Sanierungspacker zum Sanieren von Objekten und insbesondere von Rohren, Kanälen und dergleichen weist einen langgestreckten Grundkörper auf, der in das zu sanierende Objekt einschiebbar ist und der im Inneren dieses Objekts expandierbar ist. Dabei ist der Grundkörper flexibel und kann mittels eines fließfähigen Mediums, welches diesem Grundkörper zuführbar ist, expandiert werden.

Erfindungsgemäß ist an dem Grundkörper wenigstens ein Führungsmittel angeordnet, um diesen Grundkörper gegenüber einer Innenwandung des Objekts zu führen. Dabei weist dieses Führungsmittel wenigstens zwei drehbare Körper auf, welche dazu geeignet und bestimmt sind, gegenüber einer Innenwandung des Objekts abzurollen.

So wird vorgeschlagen, dass der Sanierungspacker wenigstens eine Rolle, ein Rad, eine drehbar gelagerte Kugel oder dergleichen aufweist, welches gegenüber der Innenoberfläche des Rohres bewegbar ist. Auf diese Weise kann der Sanierungspacker leichter innerhalb eines Rohres transportiert werden. Dabei können die Rohre oder Kanäle unterschiedliche Querschnitte aufweisen, beispielsweise kreisförmige Querschnitte, elliptische Querschnitte und dergleichen. Daneben können die Rohre jedoch auch Nuten bzw. Ausnehmungen haben, innerhalb denen beispielsweise das besagte Rad rollen kann. Bei einer bevorzugten Ausführungsform weist der Grundkörper einen Anschluss auf, um einem Innenraum dieses Grundkörpers ein fließfähiges und insbesondere gasförmiges Medium zuzuführen, um diesen so zu expandieren.

Bei einer weiteren bevorzugten Ausführungsform ist der Grundkörper temperierbar. Auf diese Weise kann eine verbesserte Aushärtung einer an dem Grundkörper anliegenden Substanz erreicht werden.

Insbesondere handelt es sich bei dem zu sanierenden Objekt um einen wenigstens abschnittsweise gekrümmten Kanal, ein wenigstens abschnittsweise gekrümmtes Rohr oder dergleichen. Insbesondere bei diesen Objekten ist die Führungseinrichtung geeignet, um den Grundkörper durch dieses Objekt zu führen. Dabei ist es denkbar, dass einer der drehbaren Körper derart ausgebildet ist, dass er in einem nicht expandierten Zustand des Grundkörpers in dessen radialer Richtung nur leicht über diesen hinaussteht. So ist es möglich, dass der Grundkörper einen im Wesentlichen kreisförmigen Querschnitt mit einem vorgegebenen Radius aufweist und der drehbare Körper geringfügig über diesen Radius hinaussteht. So ist es möglich, dass der drehbare Körper weniger als 30 %, bevorzugt weniger als 20 % und besonders bevorzugt weniger als 10 % über diesen Radius hinaussteht. Auch wäre es möglich, dass einer der drehbaren Körper nicht vollständig, sondern nur teilweise über den besagten Radius hinaussteht.

Auch wäre es möglich, dass einer der drehbaren Körper in einem nicht expandierten Zustand des Grundkörpers über diesen hinaussteht, nicht mehr jedoch in einem expandierten Zustand des Grundkörpers. Auf diese Weise ist es möglich, dass der drehbare Körper den eigentlichen Reparatur- bzw. Sanierungsvorgang des zu sanierenden Objekts nicht mehr behindert, da er in einem expandierten Zustand des Grundkörpers gegenüber diesem zurückgezogen ist.

Bevorzugt ragt einer der drehbaren Körper in einer Projektion des Sanierungspackers entlang einer Längsrichtung des Grundkörpers über diesen (insbesondere seitlich) hinaus.

Bei einer bevorzugten Ausführungsform ist einer der drehbaren Körper daher als Rolle oder Rad ausgeführt.

Erfindungsgemäß weist das Führungsmittel wenigstens zwei und bevorzugt wenigstens drei und besonders bevorzugt wenigstens vier drehbare Körper auf, welche dazu geeignet und bestimmt sind, gegenüber der Innenwandung des Objekts abzurollen. Auf diese Weise kann eine Position des Sanierungspackers innerhalb des zu sanierenden Rohres sehr genau definiert werden. Auch wird auf diese Weise die Führung des Sanierungspackers innerhalb des Rohres erleichtert. Besonders bevorzugt weist das Führungsmittel vier drehbare Körper auf. Bevorzugt weisen diese drehbaren Körper den gleichen Querschnitt auf. Die Verwendung von vier drehbaren Körpern bzw. Rollen hat sich als besonders geeignet für eine günstige Führung erwiesen.

Bevorzugt sind diese drehbaren Körper in einer Umfangsrichtung des Grundkörpers um diesen herum angeordnet und besonders bevorzugt auch in einer Längsrichtung des Grundkörpers gegenüber diesem versetzt. Bevorzugt sind die drehbaren Körper gleichmäßig um eine Längsrichtung des Grundkörpers herum angeordnet.

Dies bedeutet, dass in einem Transportzustand eine Rohrinnenwandung nur von den Rollen bzw. Rädern berührt wird, vorteilhaft aber nicht von dem Grundkörper. Weiterhin sind jedoch die drehbaren Körper nicht zwischen einer Außenwandung des Grundkörpers und der Rohrinnenwandung angeordnet, behindern also eine Expansion des Grundkörpers gegenüber der Innenwandung nicht.

Bei einer weiteren vorteilhaften Ausführungsform weist das Führungsmittel einen Träger auf, an dem der wenigstens eine drehbare Körper angeordnet ist. So kann beispielsweise ein Gestänge oder ein Träger vorgesehen sein, an dem eine oder mehrere Rollen, Räder oder dergleichen angeordnet sind. Dabei ist es möglich, dass der drehbare Körper von diesem Träger demontierbar ist, etwa zu Reparaturzwecken. Vorteilhaft weist der drehbare Körper einen Durchmesser auf, der größer ist als 2 cm, bevorzugt größer als 5 cm. Bevorzugt weist der drehbare Körper einen Durchmesser auf, der kleiner ist als 20 cm, bevorzugt kleiner als 15 cm und bevorzugt kleiner als 10 cm.

Bei einer bevorzugten Ausführungsform ist der Träger an einer Stirnfläche des Grundkörpers angeordnet und ist besonders bevorzugt unmittelbar an einer Stirnfläche des Grundkörpers angeordnet. Auf diese Weise kann die Stabilität der gesamten Anordnung erhöht werden.

Bevorzugt weist der Träger mehrere Ausleger auf, insbesondere wenigstens zwei, bevorzugt wenigstens drei und besonders bevorzugt wenigstens vier Ausleger, die bezüglich einander und/oder bezüglich einer Längsrichtung des Grundkörpers schwenkbar sind. Bevorzugt ist an jedem dieser Ausleger genau eine Rolle bzw. ein Rad angeordnet. Anstelle einer Rolle kann auch eine sog. Doppel- oder Mehrfachrolle vorgesehen sein, d.h. mehrere Räder, die sich um die gleiche Drehachse drehen und nebeneinander angeordnet sind. Das Vorsehen nur einer Rolle hat sich als besonders günstig erwiesen, um auch eine Führung der Vorrichtung bei leicht gekrümmten Rohren zu erleichtern.

Dabei ist es weiterhin auch noch möglich, dass der drehbare Körper, beispielsweise eine Rolle, gegenüber dem Träger schwenkbar ist und zwar bevorzugt schwenkbar bezüglich einer Achse, welche senkrecht zu einer Drehachse des drehbaren Körpers steht. So kann der drehbare Körper etwa in der Weise wie Drehrollen an einem Stuhl angeordnet sein. Auf diese Weise kann auch eine Führung des Sanierungspackers durch Kurven oder gekrümmte Abschnitte hindurch leichter erreicht werden.

Weiterhin ist es möglich, dass der drehbare Körper als Doppelrolle ausgeführt ist, wobei ein Träger dieses drehbaren Körpers beispielsweise zwischen den beiden Einzelrollen dieser Doppelrolle angeordnet ist.

Erfindungsgemäß sind die wenigstens zwei drehbaren Körper von dem Grundkörper demontierbar. Dabei ist es möglich, dass ein Träger vorgesehen ist, an dem mehrere drehbare Körper angeordnet sind und dieser vollständige Träger von dem Grundkörper demontierbar ist. Erfindungsgemäß sind die wenigstens zwei drehbaren Körper mittels einer Steckverbindung an dem Grundkörper angeordnet. Durch die Demontierbarkeit ist es möglich, dass der Grundkörper sowohl ohne einen Rädersatz bzw. ohne drehbare Körper verwendet wird als auch mit drehbaren Körpern. Insbesondere kann ein Träger, an dem die drehbaren Körper angeordnet sind, an einem Grundkörper angeschraubt werden und auch wieder von ihm demontiert werden. Dies stellt einen erheblichen Vorteil gegenüber aus dem Stand der Technik bekannten Lösungen dar, bei denen ein Radsatz fest und untrennbar mit dem Grundkörper verbunden ist.

So kann es sich beispielsweise um eine Steckverbindung handeln, welche manuell eingesteckt werden kann. Damit ist bei dieser besonders bevorzugten Ausführungsform der Träger in seiner Gesamtheit von dem Grundkörper demontierbar und auf diese Weise kann in besonders einfacher Weise eine Umstellung eines Sanierungspackers beispielsweise auf unterschiedliche Rohrquerschnitte erreicht werden.

Bei einer weiteren vorteilhaften Ausführungsform ist eine Relativposition wenigstens zweier drehbarer Körper bezüglich einander veränderbar. Insbesondere ist ein radialer Abstand diesen drehbaren Körper zueinander und/oder gegenüber einer Längsrichtung der Vorrichtung veränderbar. Auf diese Weise ist ebenfalls eine leichte Anpassung an unterschiedliche Rohrquerschnitte denkbar. So kann beispielsweise ein Träger mehrere Ausleger haben, an deren Enden jeweils die drehbaren Körper angeordnet sind. Diese Ausleger können bezüglich einander verstellt bzw. bewegt werden, um den Sanierungspacker bzw. dessen Führungseinrichtung an unterschiedliche Rohrquerschnitte anzupassen. Dabei ist es möglich, dass die Position der drehbaren Körper in unterschiedlichen Positionen fixierbar ist.

Bei einer weiteren bevorzugten Ausführungsform sind bevorzugt mehrere drehbare Körper an einem Gestell angeordnet. Dieses Gestell kann bevorzugt zusammengeklappt werden. Bevorzugt kann ein Abstand der einzelnen drehbaren Körper bezüglich einander verändert werden.

Insbesondere kann bevorzugt dieses Gestell so zusammengeklappt werden, dass die drehbaren Körper in diesem Zustand nicht mehr über den Querschnitt des Grundkörpers hinausragen.

Auch wäre es beispielsweise möglich, dass die einzelnen Räder an teleskopartigen Trägern angeordnet sind, sodass beispielsweise eine derartige Rolle gegenüber dem Grundkörper in unterschiedlichen Entfernungen aus- oder eingefahren werden kann.

Bevorzugt sind mehrere drehbare Körper jeweils an Trägern bzw. Armen angeordnet, wobei diese Träger gegenüber einer Längsrichtung des Grundkörpers schwenkbar sind. Auf diese Weise können die einzelnen drehbaren Körper zusammengefaltet werden.

Bevorzugt ist eine Schwenkbewegung wenigstens zweier Träger und bevorzugt wenigstens dreier Träger und bevorzugt aller Träger, an denen jeweils drehbare Körper angeordnet sind miteinander gekoppelt.

Bevorzugt sind die drehbaren Körper bezüglich einer Drehachse drehbar, die senkrecht zu der Längsrichtung des Grundkörper stehen. Dabei sind jedoch diese Drehachsen der drehbaren Körper bezüglich einander und auch gegenüber der Längsrichtung des Grundkörpers versetzt.

Bei einer weiteren vorteilhaften Ausführungsform ist das Führungsmittel stirnseitig an dem Grundkörper angeordnet. So kann besonders günstig der Sanierungspacker innerhalb eines Rohres transportiert werden, da insbesondere bereits seine insbesondere vordere Stirnfläche mittels der drehbaren Körper geführt wird.

Bei einer weiteren bevorzugten Ausführungsform kann der Sanierungspacker auf ein zweites Führungsmittel aufweisen, welches bezüglich des oben beschriebenen ersten Führungsmittels an der gegenüberliegenden Seite des Grundkörpers angeordnet ist. Auf diese Weise ist der Grundkörper zwischen den beiden Führungsmitteln angeordnet.

Bei einer weiteren vorteilhaften Ausführungsform weist der Sanierungspacker wenigstens einen Anschluss auf, um dem Grundkörper ein fließfähiges Medium zuzuführen und dieser Anschluss ist an einer ersten Stirnseite des Grundkörpers angeordnet und das Führungsmittel ist an einer dieser ersten Stirnseite des Grundkörpers gegenüberliegenden Seite angeordnet. Bei dieser Ausführungsform weist der Grundkörper zwei einander gegenüberliegende Stirnflächen auf, zwischen denen insbesondere der flexible Abschnitt angeordnet ist, der zu Reparaturzwecken expandiert werden kann. An einer der Stirnflächen ist wie gesagt ein Anschluss zum Zuführen des fließfähigen Mediums angeordnet und an der anderen Stirnfläche ein Führungsmittel.

Die vorliegende Erfindung ist weiterhin auf ein Verfahren zum Sanieren von Sanieren von Objekten und insbesondere von Rohren, Kanälen und dergleichen gerichtet, wobei ein länglicher Grundkörper in das zu sanierende Objekt eingeschoben und im Inneren dieses Objekts expandiert wird, wobei dieser Grundkörper flexibel ist und mittels eines fließfähigen Mediums, welches diesem Grundkörper zugeführt wird, expandiert wird.

Erfindungsgemäß wird der Grundkörper mittels wenigstens einem Führungsmittel gegenüber dem Objekt geführt, wobei dieses Führungsmittel wenigstens zwei drehbare Körper aufweist, die gegenüber einer Innenwandung des Objekts abrollen.

Es wird daher auch verfahrensseitig vorgeschlagen, dass der Grundkörper innerhalb des Objekts geführt wird. Besonders bevorzugt handelt es sich bei dem Objekt um ein gekrümmtes Objekt. Erfindungsgemäß wird für das Verfahren eine Vorrichtung der oben beschriebenen Art verwendet. Bevorzugt wird die Vorrichtung wenigstens zeitweise durch einen gekrümmten Abschnitt des Objekts geführt bzw. transportiert.

Besonders bevorzugt wird der Grundkörper unter wenigstens zeitweiliger Verwendung der Führungseinrichtung an eine zu sanierende Stelle des Objekts geführt bzw. transportiert und dann expandiert. Besonders bevorzugt wird der Grundkörper in seiner radialen Richtung expandiert. Dies bedeutet, dass die Expansion in erster Linie durch eine radiale Ausdehnung des Grundkörpers erreicht wird. Besonders bevorzugt wird der Grundkörper nicht in seiner Längsrichtung und/oder der Richtung, in welcher er transportiert wird, expandiert.

Bevorzugt ist daher der Grundkörper derart gestaltet, dass er insbesondere in seiner radialen Richtung expandierbar ist. Bevorzugt ist der Grundkörper nicht oder im Wesentlichen nicht in seiner Längsrichtung expandierbar. Bevorzugt ist der Grundkörper jedoch bezüglich seiner Längsrichtung flexibel.

Bei einer weiteren bevorzugten Ausführungsform ist der Grundkörper im Wesentlichen zylinderförmig ausgebildet. Bevorzugt ist der Grundkörper sowohl in einem expandierten Zustand als auch in einem nicht expandierten Zustand im Wesentlichen zylinderförmig ausgebildet. Insbesondere ist der Grundkörper dazu geeignet und bestimmt, Rohre in Abschnitten zu sanieren, in denen diese Rohre keine Abzweigungen aufweisen.

Bevorzugt ist der Grundkörper aus einem flexiblen Material hergestellt. Insbesondere weist der Grundkörper keinen Metallkern auf. Bevorzugt sind an dem Grundkörper endseitig bzw. stirnseitig Befestigungseinrichtung wie insbesondere aber nicht ausschließlich Gewinde angeordnet, um hieran die drehbaren Körper bzw. den Träger mit den drehbaren Körpern zu verbinden.

Weitere Vorteile und Ausführungsformen ergeben sich aus den beigefügten Zeichnungen:
Darin zeigen:
- Fig. 1: eine schematische Darstellung eines Sanierungspackers mit einem Führungsmittel;
- Fig. 2: eine Darstellung eines Führungsmittels in einem ersten Zustand;
- Fig. 3: eine perspektivische Ansicht des in Fig. 2 gezeigten Führungsmittels;
- Fig. 4: eine Darstellung des in Fig. 2 gezeigten Führungsmittels in einem zweiten Zustand;
- Fig. 5: eine perspektivische Darstellung des in Führungsmittels in dem in Fig. 4 gezeigten Zustand;
- Fig. 6: Eine Darstellung des Führungsmittels in einem zusammengeklappten Zustand.

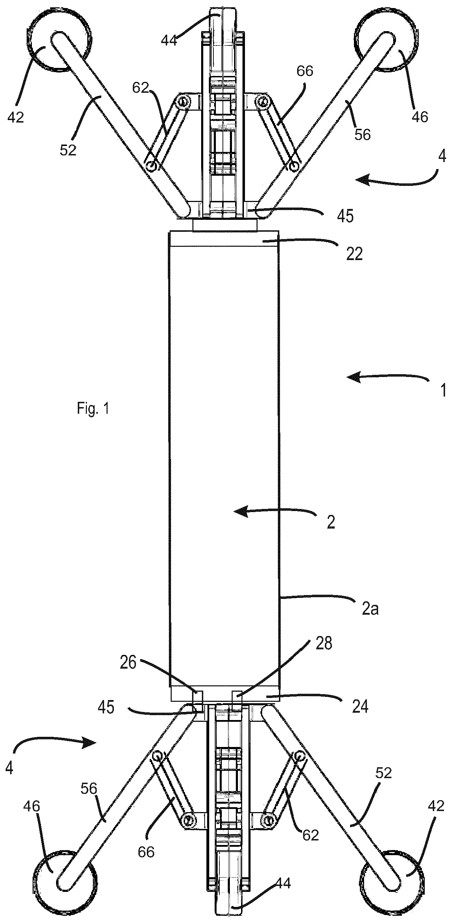

Fig. 1 zeigt eine Darstellung einer erfindungsgemäßen Vorrichtung 1. Dabei bezieht sich das Bezugszeichen 2 auf einen flexiblen Grundkörper, der in ein zu sanierendes Rohr einführbar ist. An diesem Grundkörper sind an dessen Außenoberfläche 2a Materiallagen anbringbar und diese sind dann an die defekte Stelle eines Rohres anpressbar.

Zu diesem Zweck ist der Grundkörper expandierbar, beispielsweise mit Druckluft.

An dem Grundkörper können zwei Abschlusselemente 22, 24 wie beispielsweise Abschlussplatten angeordnet sein.

Die Bezugszeichen 26 und 28 beziehen sich auf Anschlüsse, um dem Grundkörper 2 Druckluft zuzuführen, um diesen zu expandieren. An dem Anschlusselement 22 ist ein in seiner Gesamtheit mit 4 bezeichnetes Führungsmittel angeordnet, welches dazu dient, um den Grundkörper 2 bzw. die gesamte Vorrichtung leichter durch ein zu sanierendes Rohr bewegen zu können.

An dem Abschlusselement 24 ist ein weiteres Führungsmittel 4 angeordnet. Damit ist der Grundkörper 2 hier zwischen zwei Führungsmitteln 4 angeordnet und kann so beidseitig geführt werden. Es wäre jedoch auch denkbar, dass der Grundkörper nur einseitig von einem Führungsmittel 4 geführt wird.

Dabei ist es denkbar, dass das Führungsmittel bzw. die Führungseinrichtung 4 von dem Anschluss demontierbar ist. Die Führungseinrichtung kann dabei mit unterschiedlichen Befestitungseinrichtungen an dem Anschlusselement und/oder dem Grundkörper angeordnet sein, etwa mit Schrauben aber auch Mittels Befestigungsmitteln wie etwa einem Bajonettverschluss.

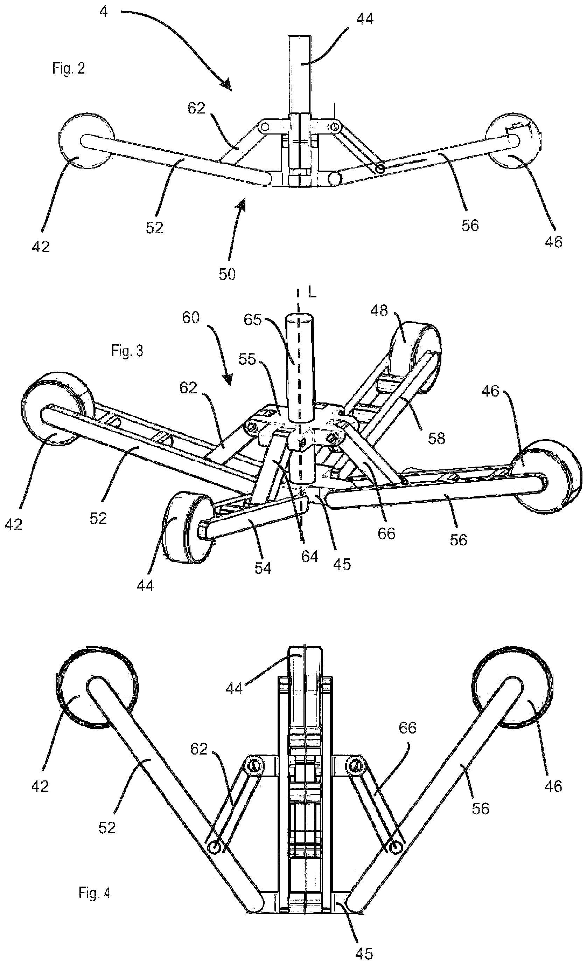

Fig. 2 zeigt eine Darstellung eines Führungsmittels 4. Dieses weist insgesamt vier drehbare Körper 42, 44, 46 (48 nicht gezeigt) auf, die jeweils an schwenkbaren Armen 52, 56 angeordnet sind. Bei der in Fig. 2 gezeigten Situation sind die einzelnen Arme, an denen die drehbaren Körper angeordnet sind, im Wesentlichen vollständig ausgelenkt.

Fig. 3 zeigt eine perspektivische Darstellung des in Fig. 2 gezeigten Führungsmittels 4. Man erkennt hier insgesamt vier Rollen 42, 44, 46, 48, die jeweils an Armen bzw. Auslegern 52, 54, 56 und 58 angeordnet sind. Dabei sind diese Arme 52, 54, 56 und 58 hier gleichmäßig in Umfangsrichtung verteilt. Das Bezugszeichen 65 kennzeichnet einen Führungsmittelträger, an dem das Führungsmittel 4 angeordnet ist.

Die einzelnen Arme 52, 54, 56 und 58 sind schwenkbar an dem Führungsmittelträger 65 angeordnet. Auf diese Weise ist es möglich, dass durch eine Änderung der Schwenkstellung eingestellt werden kann, wie weit die einzelnen Rollen 42, 44, 46, 48 ausgefahren werden sollen. Bevorzugt sind auch die Schwenkungen der einzelnen Arme aneinander gekoppelt.

Die Bezugszeichen 62, 64, 66 und 68 kennzeichnen Stellarme, an denen die Arme 52, 54, 56 und 58 angelenkt sind. Weiterhin sind diese Stellarme an einem Stellglied 55 angelenkt. Die Arme 52, 54, 56 und 58 sind an einem Basiselement 45 angelenkt.

Durch eine Verschiebung des Stellglieds 55 gegenüber dem Basiselement 45 können die einzelnen Arme 52, 54, 56, 58 mit den daran angeordneten Rollen 42, 44, 46 und 48 eingeschwenkt oder ausgeschwenkt werden. Dabei erfolgt dieses Schwenken der Arme, wie oben erwähnt gemeinsam. Die Arme 52, 54, 56, 58 bilden gemeinsam mit dem Stellglied 55 und dem Basiselement 45 sowie dem Führungsmittelträger 65 ein in seiner Gesamt mit 60 bezeichnetes Gestell.

Weiterhin ist eine (nicht gezeigte) Arretierungseinrichtung vorgesehen, mittels derer das Stellglied gegenüber dem Führungsmittelträger fixierbar ist. Auf diese Weise können auch die Rollen 42, 44, 46, 48 in einer bestimmten Stellung gegenüber dem Führungsmittelträger 65 arretiert werden.

Diese Arretierungseinrichtung kann beispielsweise eine Schraube sein, welche auf den Führungsmittelträger zugestellt werden kann. Auch wäre es möglich, dass der Führungsmittelträger 65 als Gewindestange ausgeführt ist und das Stellglied 55 gegenüber dieser Gewindestange (und bezüglich der Längsrichtung L) drehbar ist, um eine Verstellung der Rollen 42, 44, 46 und 48 herbeizuführen.

Daneben könnten in dem Führungsmittelträger 65 auch Löcher angeordnet sein, in denen Schrauben eingeschraubt sein können. In diesem Fall ist das Stellglied stufenweise gegenüber dem Führungsmittelträger verstellbar bzw. bewegbar.

Fig. 4 zeigt die Führungseinrichtung 4 in einem weiteren Zustand. Hier sind die Rollen 42, 44, 46 und 48 weiter eingeklappt als bei der in Fig. 2 gezeigten Situation. In diesem Fall ist die Anordnung für Rohre mit einem geringeren Durchmesser geeignet.

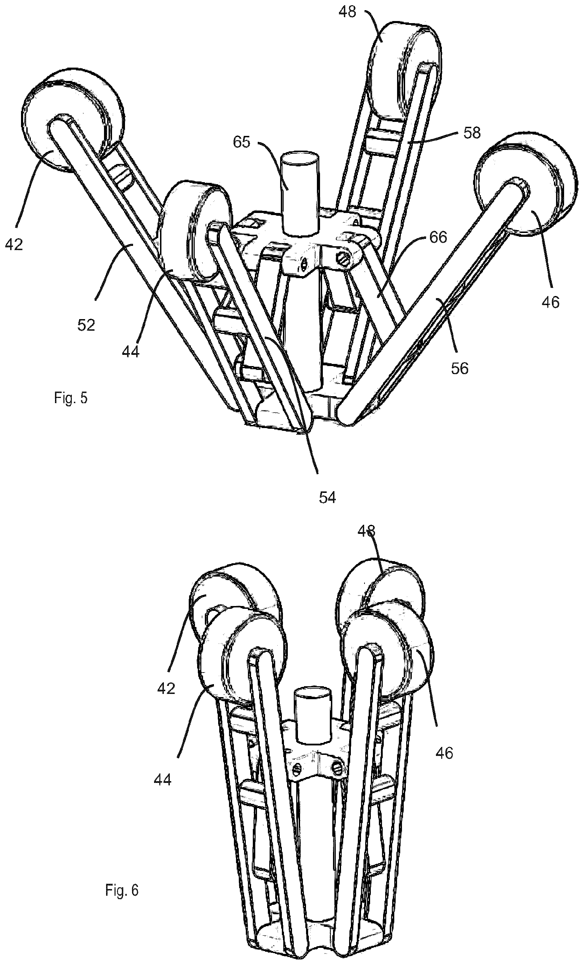

Fig. 5 zeigt eine perspektivische Ansicht, der in Fig. 4 gezeigten Situation. Man erkennt auch hier, dass das Stellglied 55 und das Basiselement 45 weiter voneinander beabstandet sind als bei der in Fig. 3 gezeigten Situation.

Fig. 6 zeigt das Führungsmittel 4 in einem vollständig eingeklappten Zustand. In diesem Zustand kann das Führungsmittel beispielsweise transportiert werden.

Es wird darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Grundkörper
- 4: Führungsmittel, Führungseinrichtung
- 22, 24: Abschlusselement
- 26, 28: Anschlüsse
- 42, 44, 46, 48: Rollen, drehbare Körper
- 45: Basiselement
- 52, 54, 56, 58: Arme, Träger
- 55: Stellglied
- 60: Gestell
- 62, 64, 66, 68: Stellarme
- 65: Führungsmittelträger
- L: Längsrichtung

## Patentansprüche

1. Sanierungspacker (1) zum Sanieren von Objekten und insbesondere von Rohren, Kanälen und dergleichen, mit einem länglichen Grundkörper (2), der in das zu sanierende Objekt einschiebbar und im Inneren dieses Objekts expandierbar ist, wobei dieser Grundkörper (2) flexibel ist und mittels eines fließfähigen Mediums, welches diesem Grundkörper zuführbar ist, expandierbar ist, wobei an dem Grundkörper wenigstens ein Führungsmittel (4) angeordnet ist, um diesen Grundkörper gegenüber einer Innenwandung des Objekts zu führen, wobei das Führungsmittel wenigstens zwei drehbare Körper (42, 44) aufweist, welche dazu geeignet und bestimmt sind, gegenüber der Innenwandung des Objekts abzurollen, wobei die drehbaren Körper jeweils an mindestens zwei schwenkbaren Auslegern (52, 54) angeordnet sind,
**dadurch gekennzeichnet, dass**
die wenigstens zwei drehbaren Körper (42, 44) von dem Grundkörper demontierbar sind und mittels einer Steckverbindung an dem Grundkörper (2) angeordnet sind.

2. Sanierungspacker (1) nach Anspruch 1,
**dadurch gekennzeichnet, dass**
wenigstens einer dieser drehbaren Körper als Rolle oder Rad ausgeführt ist.

3. Sanierungspacker (1) nach wenigsten einem der vorangegangenen Ansprüche,
**dadurch gekennzeichnet, dass**
das Führungsmittel (4) einen Träger (50) aufweist, an dem die wenigstens zwei drehbaren Körper angeordnet sind.

4. Sanierungspacker (1) nach Anspruch 3,
**dadurch gekennzeichnet, dass**
an dem Träger eine Vielzahl von Auslegern angeordnet ist, wobei an jedem Ausleger genau ein drehbarer Körper oder mehrere bezüglich der gleichen Drehachse gelagerte drehbare Körper angeordnet sind.

5. Sanierungspacker (1) nach Anspruch 1,
**dadurch gekennzeichnet, dass**
eine Relativposition wenigstens zweier drehbarer Körper (42, 44, 46, 48) bezüglich einander veränderbar ist.

6. Sanierungspacker (1) nach wenigsten einem der vorangegangenen Ansprüche,
**dadurch gekennzeichnet, dass**
das Führungsmittel stirnseitig an dem Grundkörper (2) angeordnet ist.

7. Sanierungspacker (1) nach wenigsten einem der vorangegangenen Ansprüche,
**dadurch gekennzeichnet, dass**
der Sanierungspacker (1) einen Anschluss aufweist, um dem Grundkörper ein fließfähiges Medium zuzuführen und dieser Anschluss an einer ersten Stirnseite des Grundkörpers (2) angeordnet ist und das Führungsmittel an einer dieser ersten Stirnseite des Grundkörpers (2) gegenüberliegenden Seite angeordnet ist.

8. Verfahren zum Sanieren von Objekten und insbesondere von Rohren, Kanälen und dergleichen, mit einem Sanierungspacker (1) nach wenigstens einem der vorangegangenen Ansprüche, wobei der längliche Grundkörper (2) in das zu sanierende Objekt eingeschoben und im Inneren dieses Objekts expandiert wird, wobei dieser Grundkörper (2) flexibel ist und mittels eines fließfähigen Mediums, welches diesem Grundkörper zugeführt wird, expandiert wird, wobei der Grundkörper mittels dem wenigstens einem Führungsmittel gegenüber dem Objekt geführt wird, wobei dieses Führungsmittel wenigstens zwei drehbare Körper (42, 44) aufweist, die gegenüber einer Innenwandung des Objekts abrollen,
**dadurch gekennzeichnet, dass**
die wenigstens zwei drehbaren Körper (42, 44) von dem Grundkörper demontierbar sind und mittels einer Steckverbindung an dem Grundkörper (2) angeordnet sind.

## Claims

1. Renovation packer (1) for renovating objects and in particular pipes, ducts and the like, comprising an elongate main body (2) which can be inserted into the object to be renovated and can be expanded in the interior of said object, wherein said main body (2) being flexible and being expandable by means of a flowable medium which can be supplied to said main body, wherein at least one guide means (4) being arranged on the main body for guiding said main body relative to an inner wall of the object, wherein the guide means comprising at least two rotatable bodies (42, 44) which are suitable and intended to roll relative to the inner wall of the object, wherein the rotatable bodies each being arranged on at least two pivotable arms (52, 54),
**characterized in that**
the at least two rotatable bodies (42, 44) are removable from the main body and are arranged on the main body (2) by means of a plug-in connection.

2. Renovation packer (1) according to claim 1,
**characterized in that**
at least one of these rotatable bodies is designed as a roller or wheel.

3. Renovation packer (1) according to at least one of the preceding claims,
**characterized in that**
the guide means (4) has a carrier (50) on which the at least two rotatable bodies are arranged.

4. Renovation packer (1) according to claim 3,
**characterized in that**
a plurality of cantilevers is arranged on the carrier, wherein exactly one rotatable body or several rotatable bodies mounted with respect to the same axis of rotation are arranged on each cantilever.

5. Renovation packer (1) according to claim 1,
**characterized in that**
a relative position of at least two rotatable bodies (42, 44, 46, 48) with respect to each other is variable.

6. Renovation packer (1) according to at least one of the preceding claims,
**characterized in that**
the guide means is arranged on the end face of the main body (2).

7. Renovation packer (1) according to at least one of the preceding claims,
**characterized in that**
the renovation packer (1) has a connection for supplying a flowable medium to the main body and this connection is arranged on a first end face of the main body (2) and the guide means is arranged on a side opposite this first end face of the main body (2).

8. Method for renovating objects and in particular pipes, ducts and the like, comprising a renovation packer (1) according to at least one of the preceding claims, wherein the elongated main body (2) is inserted into the object to be renovated and expanded inside said object, wherein said main body (2) being flexible and expanded by means of a flowable medium, which is supplied to said main body, wherein said main body being guided relative to said object by means of said at least one guide means, wherein said guide means comprising at least two rotatable bodies (42, 44) which roll relative to an inner wall of said object,
**characterized in that**
the at least two rotatable bodies (42, 44) are removable from the main body and are arranged on the main body (2) by means of a plug-in connection.

## Revendications

1. Garniture d'étanchéité de réparation (1) pour réparer des objets et en particulier des tubes, des canaux ou similaires, avec un corps de base allongé (2), qui peut être enfilé dans l'objet à réparer et peut s'expanser à l'intérieur dudit objet, dans laquelle ledit corps de base (2) est flexible et peut s'expanser au moyen d'un milieu coulant, lequel peut être amené audit corps de base, dans lequel au moins un moyen de guidage (4) est disposé sur le corps de base pour guider ledit corps de base par rapport à une paroi intérieure de l'objet, dans laquelle le moyen de guidage présente au moins deux corps rotatifs (42, 44), lesquels sont adaptés pour et se destinent à rouler par rapport à la paroi intérieure de l'objet, dans laquelle les corps rotatifs sont disposés respectivement sur au moins deux bras (52, 54) pivotants,
**caractérisée en ce que**
les deux moins deux corps rotatifs (42, 44) peuvent être démontés du corps de base et sont disposés sur le corps de base (2) au moyen d'une connexion enfichable.

2. Garniture d'étanchéité de réparation (1) selon la revendication 1,
**caractérisée en ce que**
au moins un desdits corps rotatifs est réalisé en tant que roulette ou roue.

3. Garniture d'étanchéité de réparation (1) selon au moins l'une quelconque des revendications précédentes,
**caractérisée en ce que**
le moyen de guidage (4) présente un support (50) sur lequel les au moins deux corps rotatifs sont disposés.

4. Garniture d'étanchéité de réparation (1) selon la revendication 3,
**caractérisée en ce que**
une pluralité de bras est disposée sur le support, dans laquelle précisément un corps rotatif ou plusieurs corps rotatifs montés par rapport au même axe de rotation sont disposés sur chaque bras.

5. Garniture d'étanchéité de réparation (1) selon la revendication 1,
**caractérisée en ce que**
une position relative d'au moins deux corps rotatifs (42, 44, 46, 48) les uns par rapport aux autres peut être modifiée.

6. Garniture d'étanchéité de réparation (1) selon au moins l'une quelconque des revendications précédentes,
**caractérisée en ce que**
le moyen de guidage est disposé côté frontal sur le corps de base (2).

7. Garniture d'étanchéité de réparation (1) selon au moins l'une quelconque des revendications précédentes,
**caractérisée en ce que**
la garniture d'étanchéité de réparation (1) présente un raccord pour amener au corps de base un milieu coulant, et ledit raccord est disposé sur un premier côté frontal du corps de base (2) et le moyen de guidage est disposé sur un côté faisant face audit premier côté frontal du corps de base (2).

8. Procédé de réparation d'objets et en particulier de tubes, de canaux et similaires, avec une garniture d'étanchéité de réparation (1) selon au moins l'une quelconque des revendications précédentes, dans lequel le corps de base allongé (2) est enfilé dans l'objet à réparer et s'expanse à l'intérieur dudit objet, dans lequel ledit corps de base (2) est flexible et s'expanse au moyen d'un milieu coulant, lequel est amené audit corps de base, dans lequel le corps de base est guidé par rapport à l'objet au moyen de l'au moins un moyen de guidage, dans lequel ledit moyen de guidage présente au moins deux corps rotatifs (42, 44), qui roulent par rapport à une paroi intérieure de l'objet,
**caractérisé en ce que**
les au moins deux corps rotatifs (42, 44) peuvent être démontés du corps de base et sont disposés sur le corps de base (2) au moyen d'une connexion enfichable.
